# FASCICULE DE BREVET EUROPEEN

(11) **EP 2 759 993 B1**
(45) Date de publication et mention de la délivrance du brevet: **27.12.2017**
(21) Numéro de dépôt: 14152964.4
(22) Date de dépôt: 29.01.2014
(51) Int. Cl.: G08B 13/12, G06F 21/83, G07F 19/00

(54) **Protection de dalle tactile**
Schutz für berührungsempfindliche Platte
Touchpad protection

(30) Priorité: 29.01.2013 FR 1350750
(43) Date de publication de la demande: 30.07.2014
(73) Titulaire: Ingenico Group, 75015 Paris (FR)
(72) Inventeur: Schang, M. Bernard, 78320 Le Mesnil Saint Denis (FR); Quenet, M. Alexandre, 75013 Paris (FR)
(74) Mandataire: Vidon Brevets & Stratégie

(56) Documents cités:
- US-A1- 2006 259 788
- US-A1- 2008 278 353
- US-A1- 2008 278 355

## Description

### 1 DOMAINE DE L'INVENTION

La technique décrite se rapporte au domaine des dispositifs intégrant des écrans tactiles. Plus particulièrement, la présente invention se rapporte au domaine des terminaux, comme des terminaux de paiement comprenant des écrans tactiles.

### 2 SOLUTIONS DE L'ART ANTERIEUR

Les terminaux comprenant un écran tactile sont de plus en plus nombreux. Il s'agit par exemple de téléphones intelligents (également appelés « smartphones ») de tablettes numériques, etc. Dans le domaine bancaire, les terminaux ont évolué de manière plus lente que dans les autres domaines, principalement pour des questions de sécurité. En effet, on attend forcément d'un terminal traitant des transactions d'achat ou de vente (comme un terminal de paiement) une certaine sécurité. Ainsi, le terminal doit assurer d'une part sa propre sécurité, puis la sécurisation des moyens de paiement et enfin la sécurisation de la partie des transactions bancaires qui le concerne.

C'est pourquoi les terminaux de paiement à écran tactiles sont apparus relativement tard par rapport aux autres terminaux. Cependant, malgré cette apparition tardive, il subsiste des problèmes de sécurité relatifs à l'utilisation d'une dalle tactile. En effet, bien que l'utilisation d'une dalle tactile offre des avantages, comme par exemple l'éventuelle suppression du clavier physique, la possibilité de modifier l'affichage en fonction des transactions, la mixité des saisies, ..., la sécurité physique du terminal reste menacée.

Ainsi, il a été constaté que l'adjonction de la dalle tactile sur un terminal de paiement pouvait permettre à des attaquants de pénétrer à l'intérieur du terminal sans que cela déclenche la mise en oeuvre d'une procédure de sécurisation, comme par exemple l'effacement des données pertinentes des mémoires du terminal.

En effet, une dalle tactile étant un composant particulier, les concepteurs des terminaux existants jusqu'alors n'ont pas toujours envisagé que celle-ci puisse faire l'objet d'une intrusion volontaire de la part d'un attaquant. Ils ont dans certains cas oublié, dans les mesures de sécurité mises en oeuvre, de sécuriser la dalle tactile en tant que telle (c'est-à-dire pour elle-même).

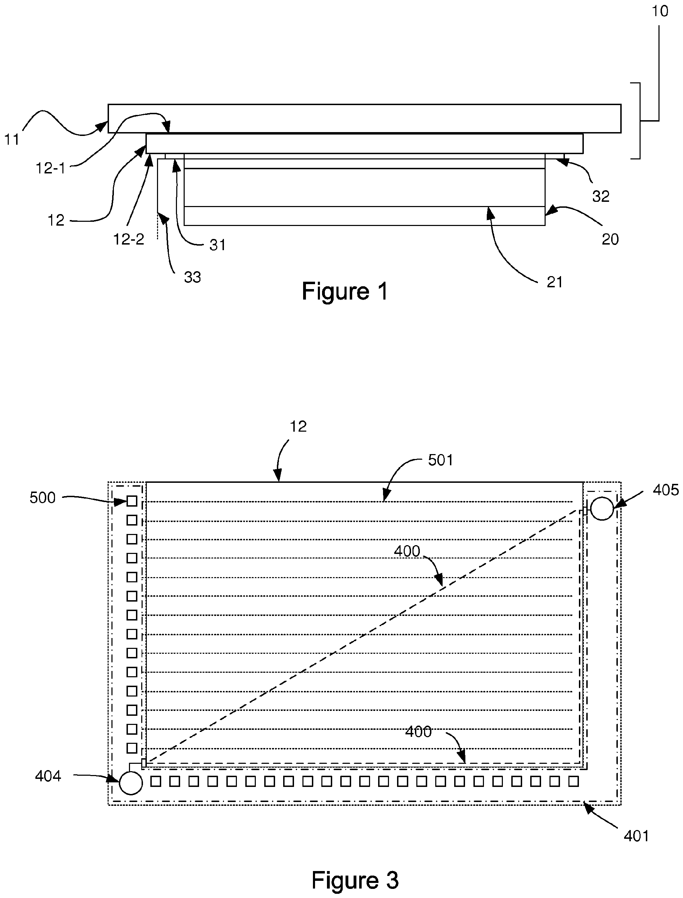

Pour mieux comprendre le problème posé, on décrit, en relation avec la figure 1, l'architecture d'une dalle tactile classique. Dans le schéma de la figure 1, les proportions des différents composants ne sont pas forcément conservées.

Une dalle tactile 10, comprend une plaque transparente supérieure 11 (appelée « top glass » en anglais) et une plaque transparente inférieure 12 (appelée « bottom glass » en anglais). La plaque supérieure 11 est en règle générale une plaque de verre inerte, servant principalement à la protection de l'écran. Son épaisseur est de l'ordre du millimètre. Comme cela est représenté, la plaque supérieure 11 peut être plus grande que la plaque transparente inférieure 12. La plaque de verre inférieure 12, également d'une épaisseur de l'ordre du millimètre est la plaque qui comprend les pistes métalliques transparentes nécessaires à la fonction tactile. Plus particulièrement, la face antérieure 12-1 de la plaque de verre comprend des pistes de détection de coordonnées en abscisse (coordonnées X) tandis que la face postérieure 12-2 de la plaque transparente inférieure 12 comprend des pistes de détection de coordonnées en ordonnée (coordonnées Y). Dans certains modes de réalisation, les dispositions des pistes de détection abscisses et ordonnées sont inversées. Des capteurs (non représentés) sont positionnés à au moins certains coins de la dalle ou sur le pourtour de celle-ci, au niveau de la plaque inférieure 12, pour pouvoir capter les différences de capacités engendrées par l'utilisation d'un doigt ou d'un stylet adapté sur la dalle. Ces capteurs sont généralement intégrés dans un circuit imprimé flexible (FPC, de l'anglais pour « Flexible Printed Circuit »). Les deux plaques sont assemblées ensemble pour former la dalle tactile. La dalle 10 est elle-même posée sur un ensemble d'affichage 20 comprenant généralement un écran à cristaux liquides 21.

Certaines mesures de protection ont cependant été mises en oeuvre, mais elles se rapportent principalement à la détection de l'extraction de la dalle. Pour prévenir l'extraction de la dalle, les concepteurs de terminaux de l'art antérieur ont donc disposé sous celle-ci des pastilles en matière conductrices (31, 32...) qui sont reliées à un circuit électrique 33. Quand la dalle est soulevée, la pastille qui est en contact avec la dalle n'assure plus de liaison entre au moins deux pistes du circuit électrique ce qui déclenche la mise en oeuvre d'une procédure de sécurisation au sein du terminal.

Cependant, cette technique souffre quelques désavantages. Il a été démontré que l'utilisation de pastilles conductrices n'est pas suffisante pour plusieurs raisons : d'une part il est possible d'insérer de la colle entre le circuit imprimé flexible et ces pastilles conductrices de la dalle tactile et par voie de conséquence de soulever la dalle tactile sans qu'une procédure de sécurisation soit mise en oeuvre. D'autre part, l'utilisation d'une pastille conductrice ne permet pas de détecter la casse de la dalle tactile, casse qui peut permettre l'introduction dans le terminal sans avoir à soulever la dalle.

### 3 RESUME DE L'INVENTION

L'invention ne pose pas ces problèmes de l'art antérieur. En effet, l'invention concerne une dalle comprenant au moins une plaque de support et au moins un circuit imprimé flexible fixé sur ladite plaque de support.

Selon l'invention, ladite plaque de support comprend, sur l'une de ses faces, au moins une première piste électrique de protection, réalisée à l'aide d'une encre conductrice, connectée à au moins une piste de connexion d'une valeur de potentiel P prédéterminée et à au moins une piste de connexion vers un processeur.

Ainsi, à la différence des dispositifs de l'art antérieur, l'invention propose une dalle comprenant une piste électrique de protection qui permet de se protéger de la casse de la dalle. En effet, lorsque la piste est brisée ou abimée, le circuit n'est plus relié au potentiel P et le potentiel mesuré à la piste de connexion avec le processeur devient aléatoire. Le processeur auquel la dalle est connectée est donc en mesure de détecter cet aléa et d'agir en conséquence. L'encre conductrice peut être une encre transparente de type ITO.

Selon un mode de réalisation particulier, ladite piste de connexion au potentiel P comprend un élément de jonction comprenant au moins deux bornes séparée par une espace libre de toute connexion.

Selon un mode de réalisation particulier ladite piste de connexion vers un processeur comprend un élément de jonction comprenant au moins deux bornes séparée par une espace libre de toute connexion.

Selon un mode de réalisation particulier, ladite première piste de protection est imprimée sur la face antérieure de ladite plaque de support.

Selon un mode de réalisation particulier, ladite première piste de protection est imprimée sur la face postérieure de ladite plaque de support.

Selon une caractéristique particulière, une deuxième piste électrique de protection est imprimée sur la face opposée à la face comprenant la première piste de protection.

Ainsi, la dalle apporte une protection plus efficace en permettant une identification plus étendue de la casse de la dalle.

Selon un mode de réalisation particulier, ladite plaque est une plaque de verre comprenant au moins une piste électrique de détection, ledit circuit imprimé flexible réalisant en outre une liaison entre ladite au moins une piste de détection et un processeur auquel ladite dalle est destinée à être connectée.

Selon un mode de réalisation particulier, ladite plaque de support est de forme prédéterminée et en ce que ladite piste de protection est imprimée selon une ligne continue, sensiblement proche d'au moins un bord de ladite plaque.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà commenté, présente schématiquement une dalle tactile avec un système de protection de l'art antérieur ;
- la figure 2 illustre le principe d'un mode de réalisation de l'invention
- la figure 3 décrit une mise en oeuvre du principe précédemment présenté.

### 5 DESCRIPTION DETAILLEE DE L'INVENTION

### 5.1 Rappel du principe de l'invention

Comme exposé préalablement, il a été constaté qu'il était possible de s'introduire dans un terminal comprenant une dalle tactile en démontant ou fracturant celle-ci. Dès lors, les inventeurs ont souhaité résoudre ce problème tout en conservant les propriétés inhérentes à ce type de terminal.

Une première solution pourrait consister en l'adjonction d'une surcouche à la dalle tactile, intégrée au boitier du terminal. Cependant, du fait de la nécessité de conserver les propriétés capacitives des écrans tactiles et la luminosité de l'écran, l'épaisseur d'une telle surcouche serait forcément limitée et pourrait ne pas empêcher la casse de la dalle tactile.

Une seconde solution pourrait consister à renforcer et protéger le pourtour de la dalle tactile, par exemple en adjoignant une protubérance circulaire sur le pourtour de la dalle tactile : cette solution consiste à concevoir un moule de boitier de terminal qui comprend une protubérance qui vient se positionner par-dessus le pourtour de la face supérieure de la dalle tactile. Une telle solution est intéressante pour éviter le démontage de la dalle tactile. Cette solution cependant d'une part ne préserve pas l'esthétisme du dispositif et d'autre part n'assure pas que l'on puisse détecter la casse de la dalle tactile.

D'autres techniques sont également envisageables. Par exemple une combinaison des techniques précédemment mentionnées est possible dès lors que l'on n'accorde peu d'importance à l'aspect esthétique du terminal. Une telle combinaison permettrait de résoudre partiellement un ou plusieurs des problèmes techniques susmentionnés, sans toutefois apporter une solution unique à l'ensemble des problèmes.

Selon l'invention, dans au moins un mode de réalisation, les inventeurs ont eu l'idée d'introduire un circuit électrique de détection sur la dalle tactile elle-même. Plus précisément, une dalle tactile est composée d'au moins deux plaques superposées (11, 12 en référence à la figure 1). Ces plaques peuvent être en verre ou en polycarbonate. Lorsqu'une technologie capacitive est implémentée, des pistes métalliques en oxyde d'indium (ITO) qui accumulent les charges sont placées sur chaque côté de plaque inférieure 12. Une deuxième plaque protège cette plaque inférieure 12 (il s'agit de la plaque supérieure 11). Cette deuxième plaque peut être en verre ou dans un autre matériau adéquat. Au moins un capteur dans chaque coin de la plaque inférieure permet d'identifier les emplacements où un contact est effectué. Le nombre de capteurs et leurs répartitions sont cependant souvent différents en fonction du mode de réalisation. L'ensemble constitué de ces deux plaques et des capteurs est appelé dalle tactile. La dalle tactile est ensuite positionnée par-dessus l'écran, qui est généralement un écran à cristaux liquides.

Pour pallier les problèmes de casse ou de démontage non autorisé de la dalle, les inventeurs ont donc eu l'idée d'inscrire directement sur la face postérieure (ou sur la face antérieure) de la plaque inférieure de la dalle un circuit électrique qui est relié au processeur de sécurité, comme cela est détaillé par la suite. En cas de casse ou de démontage de la dalle, le circuit électrique de la face postérieure de la plaque inférieure ne permet plus de fixer la valeur prédéterminée au potentiel P. La valeur du potentiel électrique P devient alors variable (flottante). Une procédure de sécurité est alors mise en oeuvre. Le terminal peut alors être désactivé et/ou les informations sensibles qu'il contient peuvent être effacées.

Associé à une technique de pastilles conductrices, l'invention permet ainsi, à l'aide d'un seul et unique circuit, de détecter non seulement le démontage mais aussi la casse de la dalle dans la zone des pastilles. Une attaque où l'on découperait le verre pour accéder aux pastilles conductrices devient extrêmement difficile. Il est également envisagé de mettre en oeuvre un wiremesh (circuit maillé) complet et transparent réalisé ainsi sur tout support capable de recevoir de l'encre ITO.

Bien entendu, l'invention ne se limite pas à cette application particulière. Plus particulièrement, l'invention peut être mise en oeuvre dans toute situation où il peut être nécessaire de protéger une plaque transparente sur un terminal. L'invention peut notamment s'appliquer à tout type de terminal existant, qu'il soit ou non équipé d'une dalle tactile.

### 5.2 Description d'un mode de réalisation

On décrit, dans ce mode de réalisation, une mise en oeuvre particulière de la technique précédente dans laquelle la dalle tactile reçoit un circuit imprimé à base d'encre conductrice transparente. Plus particulièrement, sur la face postérieure de la plaque inférieure de la dalle tactile, un circuit électrique à base d'encre conductrice transparente est dessiné. Ce circuit électrique est appelé WireMesh. Plus particulièrement encore, la piste de WireMesh reliée au processeur de sécurité est réalisée en matière transparente conductrice appelée ITO (« indium tin oxide ») déposée sur la face postérieure de la plaque de verre inférieure de la dalle tactile. Ainsi, lorsque l'on tente de casser le verre de la dalle tactile, la piste ITO de protection est également cassée et le processeur de sécurité détecte l'intrusion. Cette piste ITO de protection est inaccessible de l'extérieur car elle est coté intérieur du verre.

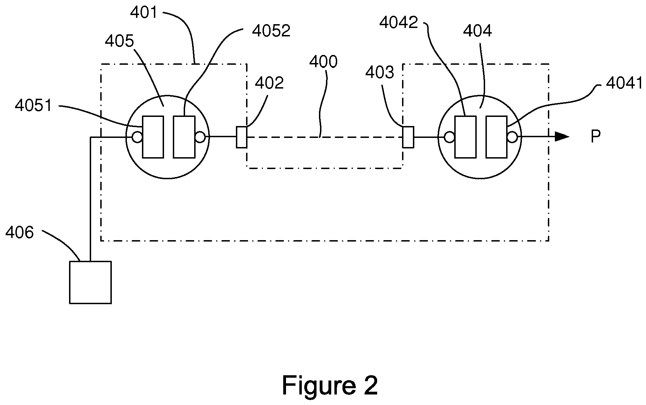

On présente, en relation avec la figure 2, le schéma de principe de ce mode de réalisation.

Une piste ITO de protection 400 est tracée sur la face postérieure de la plaque inférieure. Cette piste ITO de protection 400 est reliée au circuit imprimé flexible FPC 401 à au moins deux points de jonction (402, 403). Le circuit électrique continu est prolongé à partir de ces deux points de jonction 402, 403 vers deux éléments de jonction mécaniques (404, 405) appelés couramment dans le langage de l'homme du métier PUCK. Ces deux éléments de jonction mécaniques 404, 405 permettent, par l'utilisation de supports conducteurs (non représentés, par exemple en élastomère ou une pastille carbone) d'assurer une continuité du circuit électrique. Ces deux PUCK 404, 405 offrent la possibilité de détecter le démontage de la dalle tandis que la piste ITO de protection 400 offre la possibilité de détecter la casse de la dalle. Une borne 4041 du premier élément de jonction 404 est reliée à un potentiel P. Une borne 4042 du premier élément de jonction 404 est reliée est reliée à la piste ITO. Une borne 4051 du deuxième élément de jonction 405 est reliée à une entrée 406 du processeur de sécurité. Une borne 4052 du premier élément de jonction 405 est reliée est reliée à la piste ITO.

Ainsi, comme cela peut être compris à la lecture des explications précédentes, ce mode de réalisation propose à la fois une protection contre le démontage (par l'intermédiaire des PUCK) et contre la cassure (par l'intermédiaire de la piste ITO de protection). Si la plaque est cassée (au niveau de la piste ITO de protection) ou soulevée, le potentiel de la piste n'est plus la valeur prédéterminée du potentiel (P). Il devient flottant et ceci est détecté par le processeur de sécurité qui peut prendre les mesures nécessaires.

Dans un mode de réalisation spécifique de l'invention, la piste ITO de protection de sécurisation qui est inscrite sur la plaque est dessinée aux endroits les plus sensibles de la dalle tactile, c'est-à-dire aux endroits ou une cassure peut provoquer une brèche de sécurité. Par ailleurs, compte tenu du fait que d'autres pistes sont déjà disposées sur la dalle (pour avoir les coordonnées X et Y de la saisie, voir plus supra)

Ainsi, la piste ITO de protection protège les PUCKs (ou PADs) d'une attaque par le dessus du verre en cas de casse de celui-ci.

On présente, en relation avec la figure 3, une application de ce mode de réalisation. La figure 3 représente le vue postérieure 12-2 de la plaque 12. Sur la figure 3, la plaque de verre inférieure 12 comprend en ensemble de pistes métalliques nécessaires à la fonction tactile. Des capteurs (représentés par des carrés dont un seul est numéroté 500) sont positionnés sur le pourtour de la dalle, au niveau de la plaque inférieure 12, pour pouvoir capter les différences de capacités engendrées par l'utilisation d'un doigt ou d'un stylet adapté sur la dalle. Ces capteurs sont associés chacun à une piste ITO de détection (une seule est numérotée 501 pour éviter de surcharger le schéma). Une piste ITO de protection 400 est tracée sur la plaque inférieure (deux exemples de réalisation de la piste 400 sont indiqués sur la figure 3 pour éviter de multiplier le nombre de figures). Cette piste ITO de protection 400 est reliée au circuit imprimé flexible FPC 401 à au moins deux points de jonction (402, 403). Le circuit électrique continu est prolongé à partir de ces deux points de jonction vers les deux éléments de jonction mécaniques (404, 405).

### 5.3 Mode de réalisation complémentaire

Dans un mode de réalisation complémentaire de l'invention, non représenté, deux pistes ITO de protection sont inscrites sur la plaque inférieure. Plus particulièrement, dans ce mode de réalisation complémentaire, une première piste ITO de protection est inscrite sur la face postérieure de la plaque (comme dans le mode de réalisation précédent) et une deuxième piste ITO est inscrite sur la face antérieure. Cette deuxième piste ITO de protection, qui peut avoir un tracé différent de la première piste ITO de protection, est ainsi emprisonnée entre la plaque inférieure et la plaque supérieure.

Le principal apport de ce mode de réalisation, par rapport à des techniques de protection de démontage connues telles que les détecteurs à pastilles conductrice est que la deuxième piste ITO de protection qui est en sandwich entre la plaque de verre supérieur (cover glass) et le verre inférieur est inaccessible même par le dessous de la dalle tactile.

Dans un deuxième mode de réalisation complémentaire de l'invention, non représenté, une seule piste ITO de protection est inscrite sur la face antérieure. Il n'y a donc pas de piste ITO sur la face postérieure de la plaque inférieure.

## Revendications

1. Dalle à écran tactile (10) comprenant au moins une plaque de support transparente (12) et au moins un circuit imprimé flexible (401) fixé sur ladite plaque de support, ladite dalle étant **caractérisée en ce que** ladite plaque de support (12) comprend, sur l'une de ses faces, au moins une première piste électrique de protection (400), réalisée à l'aide d'une encre conductrice, connectée à au moins une piste de connexion d'une valeur de potentiel (P) prédéterminée et connectée à au moins une piste de connexion vers un processeur de sécurité adapté à mesurer ladite valeur de potentiel.

2. Dalle selon la revendication 1, **caractérisée en ce que** ladite piste de connexion au potentiel (P) comprend un élément de jonction 404 comprenant au moins deux bornes (4041, 4042) séparée par une espace libre de toute connexion.

3. Dalle selon la revendication 1, **caractérisée en ce que** ladite piste de connexion vers le processeur de sécurité comprend un élément de jonction 405 comprenant au moins deux bornes (4051, 4052) séparée par une espace libre de toute connexion.

4. Dalle selon la revendication 1, **caractérisée en ce que** ladite première piste de protection est imprimée sur la face antérieure de ladite plaque de support.

5. Dalle selon la revendication 1, **caractérisée en ce que** ladite première piste de protection est imprimée sur la face postérieure de ladite plaque de support.

6. Dalle selon la revendication 1, **caractérisé en ce qu'**une deuxième piste électrique de protection est imprimée sur la face opposée à la face comprenant la première piste de protection.

7. Dalle selon la revendication 1, **caractérisée en ce que** ladite plaque est une plaque de verre ou de polycarbonate comprenant au moins une piste électrique de détection, ledit circuit imprimé flexible réalisant en outre une liaison entre ladite au moins une piste de détection et un processeur auquel ladite dalle est destinée à être connectée.

8. Dalle selon la revendication 1, **caractérisée en ce que** ladite plaque de support est de forme prédéterminée et **en ce que** ladite piste de protection est imprimée selon une ligne continue, sensiblement proche d'au moins un bord de ladite plaque.

## Patentansprüche

1. Touchscreen-Panel (10) umfassend mindestens eine transparente Stützplatte (12) und mindestens eine flexible gedruckte Schaltung (401), die auf der Stützplatte befestigt ist, wobei das Panel **dadurch gekennzeichnet ist, dass** die Stützplatte (12) auf einer ihrer Seiten mindestens eine erste elektrische Schutzspur (400) umfasst, die mit Hilfe von leitfähiger Tinte hergestellt, an mindestens eine Anschlussspur mit einem vorbestimmten Potentialwert (P) angeschlossen und an mindestens eine Anschlussspur zu einem Sicherheitsprozessor, der geeignet ist, den Potentialwert zu messen, angeschlossen ist.

2. Panel nach Anspruch 1, **dadurch gekennzeichnet, dass** die Anschlussspur an das Potential (P) ein Verbindungselement (404), umfassend mindestens zwei Klemmen (4041, 4042), getrennt durch einen von jedem Anschluss freien Raum, umfasst.

3. Panel nach Anspruch 1, **dadurch gekennzeichnet, dass** die Anschlussspur an den Sicherheitsprozessor ein Verbindungselement (405), umfassend mindestens zwei Klemmen (4051, 4052), getrennt durch einen von jedem Anschluss freien Raum, umfasst.

4. Panel nach Anspruch 1, **dadurch gekennzeichnet, dass** die erste Schutzspur auf die Vorderseite der Stützplatte gedruckt ist.

5. Panel nach Anspruch 1, **dadurch gekennzeichnet, dass** die erste Schutzspur auf die Rückseite der Stützplatte gedruckt ist.

6. Panel nach Anspruch 1, **dadurch gekennzeichnet, dass** eine zweite elektrische Schutzspur auf die Seite gedruckt ist, die der Seite, umfassend die erste Schutzspur, gegenüberliegt.

7. Panel nach Anspruch 1, **dadurch gekennzeichnet, dass** die Platte eine Glas- oder Polykarbonatplatte ist, umfassend mindestens eine elektrische Erkennungsspur, wobei die flexible gedruckte Schaltung ferner eine Verbindung zwischen der mindestens einen Erkennungsspur und einem Prozessor herstellt, an den das Panel angeschlossen werden soll.

8. Panel nach Anspruch 1, **dadurch gekennzeichnet, dass** die Stützplatte eine vorbestimmte Form hat, und dass die Schutzspur entlang einer kontinuierlichen Linie im Wesentlichen in der Nähe mindestens eines Randes der Platte gedruckt ist.

## Claims

1. Touchpad (1) comprising at least one transparent supporting plate (12) and at least one flexible printed circuit (401) fixed to said supporting plate, said touchpad being **characterized in that** said supporting plate (12) comprises at least one first electrical protection track (400), made by means of a conductive ink, connected to at least one connection track with a predetermined value of potential (P) and connected to at least one connection track for connection towards a security processor adapted to measure said value of potential.

2. Touchpad according to claim 1, **characterized in that** said connection track for connection to the potential (P) comprises a junction element (404) comprising at least two endings (4041, 4042) separated by a space free of any connection.

3. Touchpad according to claim 1, **characterized in that** said connection track for connection to a security processor comprises a junction element (405) comprising at least two endings (4051, 4052) separated by a space free of any connection.

4. Touchpad according to claim 1, **characterized in that** said first protection track is printed on the forward face of said supporting plate.

5. Touchpad according to claim 1, **characterized in that** said first protection track is printed on the rear face of said supporting plate.

6. Touchpad according to claim 1, **characterized in that** a second electric protection track is printed on the face opposite the face comprising the first protection track.

7. Touchpad according to claim 1, **characterized in that** said plate is a plate made of glass or polycarbonate comprising at least one electric detection track, said flexible printed circuit furthermore setting up at least one link between said at least one detection track and a processor to which said touchpad is intended to be connected.

8. Touchpad according to claim 1, **characterized in that** said supporting plate has a predetermined shape and **in that** said protection track is printed along a continuous line appreciably close to at least one edge of said plate.
